# EUROPÄISCHE PATENTSCHRIFT

(11) **EP 2 350 753 B1**
(45) Veröffentlichungstag und Bekanntmachung des Hinweises auf die Patenterteilung: **25.12.2019**
(21) Anmeldenummer: 09771528.8
(22) Anmeldetag: 27.11.2009
(51) Int. Cl.: G05B 19/418, G05B 19/042

(54) **VERFAHREN ZUM ERSTELLEN EINER LEITTECHNISCHEN EINRICHTUNG FÜR EINE INDUSTRIEANLAGE**
METHOD FOR CREATING A CONTROL DEVICE FOR AN INDUSTRIAL PLANT
PROCÉDÉ POUR CONCEVOIR UN DISPOSITIF DE CONTRÔLE-COMMANDE POUR UNE INSTALLATION INDUSTRIELLE

(30) Priorität: 27.11.2008 DE 102008059420
(43) Veröffentlichungstag der Anmeldung: 03.08.2011
(73) Patentinhaber: Siemens Aktiengesellschaft, 80333 München (DE)
(72) Erfinder: FIEDLER, Bastian, 97437 Haßfurt (DE); ROSSETTI, Simona, 76187 Karlsruhe (DE); SPEH, Rainer, 64331 Weiterstadt (DE)
(86) Internationale Anmeldenummer: PCT/EP2009/065940
(87) Internationale Veröffentlichungsnummer: WO 2010/060976

(56) Entgegenhaltungen:
- WO-A1-2007/117172
- DE-A1- 10 353 052
- DE-A1- 19 845 764
- DE-A1-102004 038 808
- DE-A1-102004 055 814
- DE-A1-102005 013 299
- US-B1- 7 130 701

## Beschreibung

Die Erfindung betrifft ein Verfahren zum Erstellen einer leittechnischen Einrichtung für eine Industrieanlage, die einen Anlagenserver und mehrere Anlagenteile, die jeweils ein Steuersystem aufweisen, umfasst.

Beim Aufbau einer Industrieanlage, wie z.B. eines Kraftwerks, wird eine Vielzahl von Anlagenteilen auf das Kraftwerksgelände geliefert, die über eine zu erstellende leittechnische Einrichtung, im Folgenden auch Leittechnik genannt, bei einem späteren Betrieb der Anlage zusammenwirken. Deren leittechnische Funktionalitäten werden üblicherweise getrennt von den mechanischen Komponenten realisiert und beim Aufbau der Anlage für jeden Anlagenteil separat und anschließend zur leittechnischen Gesamtanlage zusammengeführt. Die Zusammenführung wird von einem Inbetriebsetzer durchgeführt, der die leittechnischen Funktionalitäten jeweils mit den mechanischen Komponenten und untereinander verbindet.

Bei einer Erweiterung des Kraftwerks oder einer Erneuerung einer Komponente des Kraftwerks wird die neue leittechnische Funktionalität in die bestehende Systemarchitektur der Leittechnik des Kraftwerks eingebunden. Hierzu bedarf es einer verfahrenstechnischen Durchsprache und einer Übertragung in die bestehende Leittechnik. Im späteren Verlauf der Inbetriebsetzung wird kontrolliert, ob der neue Anlagenteil durch die neue leittechnische Funktionalität angesteuert werden kann und ob die übrigen leittechnischen Funktionalitäten mit der neuen zusammenpassen. Die Konfiguration im Engineering verläuft Top Down nach Anschluss der Komponente an die Stromverbindung und an den Feld- bzw. Profibus.

Aus DE 103 53 052 A1 ist ein Verfahren zu einem Software-Update in einer Anlagenkomponente einer Industrieanlage bekannt. Dazu weist die Industrieanlage ein zentrales Verwaltungssystem auf, welches - als eigenständige Komponente der Industrieanlage - mit Komponenten der Industrieanlage verbunden ist.

Für die bzw. bei dem Software-Update tritt das Verwaltungssystem mit einer Anlagenkomponente in Kommunikation und überprüft den Status der dort installierten bisherigen Software. Erkennt das Verwaltungssystem einen "Aktualisierungsbedarf", installiert das Verwaltungssystem die aktuelle Software in der Komponente.

Es ist eine Aufgabe der Erfindung, ein Verfahren anzugeben, mit dem eine Leittechnik für eine Industrieanlage zuverlässig erstellt werden kann.

Diese Aufgabe wird durch ein Verfahren gemäß Anspruch 1 und eine Industrieanlage gemäß Anspruch 13 gelöst, wobei insbesondere ein Steuersystem eines der Anlagenteile, und ein zweckmäßigerweise außerhalb des Anlagenteils in der leittechnischen Einrichtung integrierter Integrationsserver in Kommunikation miteinander treten und der Integrationsserver eine leittechnische Funktionalität für das Steuersystem, z.B. des Anlagaenteils, bestimmt und deren funktionelle Implementierung in der leittechnischen Einrichtung veranlasst, z.B. im Anlagenserver und im Steuersystem des Anlagenteils. Durch die funktionelle Implementierung ist die Funktion der leittechnische Funktionalität ausführbar.

Durch einen solchen Service der abrufenden Einrichtung der Industrieanlage kann Bottom Up bei Anschluss und Identifizierung des Anlagenteils eine Verbindung mit dessen Steuersystem hergestellt werden und eine Implementierung einer leittechnischen Funktionalität für das Anlagenteil erfolgen. Die leittechnische Funktionalität kann dem Anlagenserver und/oder dem Steuerserver zur Implementierung übertragen werden. Der Engineering-Prozess des Erstellens der Leittechnik kann hierdurch vereinfacht werden. Durch dieses Verfahren kann eine zuverlässige automatische, selbstlaufende Konfiguration und Veränderung des Steuersystems erfolgen.

Das Erstellen der leittechnischen Einrichtung kann ein erstmaliges Erstellen bei einer neuen Industrieanlage oder ein Erweitern oder Ändern bei einer Anlagenmodifikation sein. Als Industrieanlage wird auch ein Kraftwerk, eine Dienstleistungsanlage, wie ein Teil eines Flughafens oder dergleichen, oder eine Verkehrsanlage verstanden.

Ein Anlagenteil ist zweckmäßigerweise ein verfahrenstechnisches Anlagenteil der Industrieanlage, wie ein Kessel, eine Turbine, ein Generator, eine Fertigungseinheit, eine Pumpe oder dergleichen. Er umfasst zusätzlich zum Steuersystem zweckmäßigerweise mechanische Anlagenelemente, wie eine Fertigungs- oder Prozesseinrichtung, die vom Steuersystem zum Bewirken eines mechanischen Prozessschritts der Anlage, z.B. einer mechanischen Behandlung eines strömenden Mediums, angesteuert werden. Der Anlagenteil umfasst zweckmäßigerweise zumindest einen Teil einer Feldebene und einer Steuerebene der Industrieanlage.

Die leittechnische Einrichtung, auch Leittechnik genannt, dient vorteilhafterweise zur Steuerung der Prozesse in der gesamten Industrieanlage. Sie kann Informationen der Feld- und Prozessebene aufbereiten und visualisieren. Sie kann Datenströme der untergeordneten Ebenen, dem Feld oder einzelner Zellen, wie zum Beispiel Signale der Mess-, Steuer- und Regelungstechnik zusammenfassen, um dadurch beispielsweise einen gesamten Fertigungsprozess oder Energieerzeugungsprozess zu steuern und zu überwachen. Die Baugruppen der Leittechnik kommunizieren über spezielle Datenverbindungen.

Der Begriff der Leittechnik wird weit gefasst und umfasst auch die Steuerungs- und Betriebsleitebene bzw. Managementebene. Die Leittechnik fasst die Datenströme der untergeordneten Ebenen, dem Feld, wie zum Beispiel Signale der Mess-, Steuer- und Regelungstechnik zusammen, um dadurch den gesamten Prozess zu steuern und zu überwachen. Die Leittechnik kann Prozessleittechnik, Betriebsleittechnik Gebäudeleittechnik und/oder Fertigungsleittechnik umfassen.

Die leittechnische Funktionalität kann Automatisierungsfunktionen, Bedienfunktionen, Beobachtungsfunktionen, wie eine Darstellung in Clients, z.B. für einen Bediener in der Leitstelle, Archivierung, Reporting, Funktionen zur Warnung und Alarmierung, zur Archivierung, für Reports - zyklisch oder ereignisgesteuert, und/oder für eine Diagnose enthalten. Auch Funktionen zur Integration in die Topografie der übrigen Leittechnik kann die leittechnische Funktion enthalten. Eine leittechnische Funktionalität kann ein Computerprogramm sein, das mehrere selbständig ablauffähige Teile umfassen kann.

Die leittechnische Funktionalität für das Anlagenteil kann nach einem Erstellen, z.B. durch den Hersteller des Anlagenteils, auf dem Offsite-Server abgelegt werden, so dass sie dort zum Abruf bereit liegt. Über den Kommunikationskanal kann sie dann von der abrufenden Einrichtung der Industrieanlage, die im Folgenden als Integrations-Server bezeichnet wird, abgerufen, in der Industrieanlage gespeichert und anschließend in der leittechnischen Einrichtung der Industrieanlage implementiert werden. Die Implementierung im Anlagenserver und im Steuersystem des Anlagenteils kann eine Installation sein.

Die Industrieanlage, - im Folgenden auch vereinfacht als Anlage bezeichnet - enthält einen oder mehrere Anlagenserver, z.B. je einen pro Energie erzeugende Einheit eines Kraftwerks. Das Steuersystem eines Anlagenteils kann in Form eines Servers aufgebaut sein. Diese Verarbeitungseinheit dient zur Steuerung des Anlagenteils und verwaltet bis zu mehrere tausend Komponenten, wie Sensoren und Aktuatoren, bzw. Schnittstellen zu Komponenten. Entsprechend kann der Anlagenteil mehrere tausend Komponenten bzw. Schnittstellen umfassen.

Anlagenspezifische Strukturen werden modular in Übersichtsdiagramme durch vorgegebenen Ein- und Ausgangswerten auf Basis der Standards erstellt. Bei der Darstellung der Übersichtsdiagramme können Anlagenteile, die mit diesem neuen Ansatz konfiguriert wurden, neben konventionell erstellten Komponenten eingefügt werden. Durch klare Wertstromvorgaben beeinflussen sich diese nicht gegenseitig. Somit wird eine Mischbarkeit von neuen und konventionellen Engineeringansätzen bei Anlagenteilen ermöglicht.

Der Integrationsserver, der auch als Integrationsservice bezeichnet werden kann, stellt ein Engineering-Hilfsmittel der Industrieanlage dar und kann auf Software beschränkt sein. Eigene Hardware ist nicht notwendig aber möglich. Er wird bei der Inbetriebsetzung der Industrieanlage verwendet und ist für den regulären Betrieb der Industrieanlage nicht notwendig.

Der Integrationsserver ist zweckmäßigerweise mehreren Anlagenteilen bzw. Systemsteuerungen zugeordnet, so dass die Kommunikation des Integrationsservers mit mehreren Steuersystemen erfolgen kann. Hierbei ist er solchen Anlagenteilen zugeordnet, deren Funktionalität zur Implementierung durch den Integrationsserver vorgesehen ist. Weiteren in der Industrieanlage vorhandenen Anlagenteilen, die für diesen Service nicht ausgerüstet sind, ist er nicht zugeordnet. Pro Anlagenserver ist zweckmäßigerweise genau ein Integrationsserver vorhanden.

Der Integrationsserver kann als Service des Anlagenservers oder separat ausgeführt sein. Im Unterschied zu einem DHCP-Server (Dynamic Host Configuration Protocol), der IP-Adressen für einzelne Komponenten vergibt, dient der Integrationsserver zur Integration der leittechnischen Funktionalitäten in die gesamte Leittechnik, bzw. in eine geplante leittechnische Struktur.

Es ist vorteilhaft, wenn die Steuersysteme der Anlagenteile jeweils einen Anmeldedienst aufweisen, beispielsweise in Form eines Client, zum selbständigen Anmelden beim Integrations-server. Hierzu ist im Steuersystem zweckmäßigerweise eine Anmelde-IP-Adresse hinterlegt, so dass die Anmeldung auf Betreiben des Steuersystems erfolgen kann.

In einer vorteilhaften Ausführungsform der Erfindung fragt der Integrationsserver Daten von einem Datenserver ab und bestimmt die leittechnische Funktionalität für das Anlagenteil in Abhängigkeit dieser Daten. Der Datenserver kann als Datenzentrum dienen und leittechnische Funktionalitäten für mehrere Anlagenteile aufweisen. Auf diese Weise können die leittechnischen Funktionalitäten für mehrere Steuersysteme mehrerer Anlagenteile auf einem Server abgelegt und von da weiterverteilt oder abgeholt werden.

Vorteilhafterweise ist der Datenserver ein außerhalb der Industrieanlage angeordneten Offsite-Server. Er kann als Datenserver für leittechnische Funktionalitäten mehrerer Anlagen dienen, die an verschiedenen Orten liegen. Er bildet so eine Datenzentrale für mehrere Anlagen. Die Kommunikation mit dem Offsite-Server erfolgt zweckmäßigerweise über das Internet.

Die zur Implementierung vorgesehene leittechnische Funktion kann Bestandteil des Anlagenteils sein oder auf dem Datenserver liegen. Liegt sie auf dem Datenserver, z.B. dem Offsite-Server, so bestimmt der Integrationsserver diese auf dem Offsite-Server abgelegte leittechnische Funktionalität zur Implementierung.

Vorteilhafterweise fragt der Integrationsserver Information, beispielsweise Versionsinformationen, zur leittechnischen Funktionalität des Anlagenteils ab, mit dem er in Kommunikation steht. Ist das Anlagenteil bereits mit einer leittechnischen Funktionalität versehen, so kann der Integrationsserver prüfen, ob diese noch aktuell ist oder ob eine aktuellere Version vorliegt, die die alte ersetzen soll.

Auf diese Weise kann der Integrationsserver aus mehreren für den betreffenden Anlagenteil vorhandenen leittechnischen Funktionalitäten eine als aktuelle Version gekennzeichnete zur Implementierung auswählen und diese implementieren.

Zum Implementieren einer neuen leittechnischen Funktionalität ist es vorteilhaft, wenn Integrationsserver erkennt, wenn eine neue Version der leittechnischen Funktionalität des Anlagenteils vorliegt, z.B. im Offsite-Server. Das Erkennen kann selbständig durch eine z.B. regelmäßige Abfrage an einer entsprechenden Stelle, wie dem Offsite-Server, oder ereignisgetriggert erfolgen.

Vorteilhafterweise enthält der Integrationsserver Informationen darüber, zu welchen Anlagenteilen er bei der Implementierung von deren leittechnischer Funktionalität mitwirkt. Die Informationen können in Form einer Liste der entsprechenden Anlagenteile vorliegen. Auf diese Weise kann der Integrationsserver eine Anmeldung eines Steuersystems bei ihm als berechtigt erkennen und die Implementierung der leittechnischen Funktionalität veranlassen. Zusätzlich können dem Integrationsserver weitere Informationen zur leittechnischen Funktionalität und/oder dessen Implementierung vorliegen. Die Informationen erhält der Integrationsserver zweckmäßigerweise ohne eine Mitwirkung eines solchen Anlagenteils, dessen leittechnische Funktionalität er implementieren soll.

Vorteilhaft ist außerdem eine Überprüfung durch den Integrationsserver, ob die ihm zur Verfügung stehende Information noch aktuell ist. So kann es vorkommen, dass ein neues Anlagenteil nun zur automatischen Integration in die Leittechnik bestimmt wurde. Wird beispielsweise eine Kommunikation von einem Anlagenteil zu ihm aufgebaut, das nicht für eine Kommunikation mit ihm vorgesehen war, so ermittelt der Integrationsserver zweckmäßigerweise, ob eine aktualisierte Aufstellung derjenigen Anlagenteile vorliegt, mit denen eine Kommunikation vorgesehen ist. Auf diese Weise kann er prüfen, ob sich ein Status des betreffenden Anlagenteils geändert hat. Vorteilhafterweise schickt der Integrationsserver dann eine Nachricht an einen Inbetriebsetzer, so dass dieser erkennen kann, dass ein weiterer Anlagenteil zur Integration bestimmt ist.

Aus der Liste der Anlagenteile kann der Integrationsserver erkennen, bei welchem Anlagenteil er bei der Implementierung mitwirken soll. Hat sich bis zu einem vorgegebenen Ablaufpunkt, der ein Zeitpunkt oder ein Schritt einer Inbetriebsetzung sein kann, ein zur Kommunikation mit ihm vorgesehenes Anlagenteil nicht bei ihm angemeldet, ermittelt der Integrationsserver zweckmäßigerweise, ob eine aktualisierte Aufstellung derjenigen Anlagenteile vorliegt, mit denen eine Kommunikation vorgesehen ist. So kann es sein, dass ein Anlagenteil aus der Liste entfernt wurde, so dass es sich korrekterweise nicht beim Integrationsserver anmeldet. Dies kann somit erkannt werden. Auch in diesem Fall kann der Integrationsserver eine Nachricht an einen Inbetriebsetzer schicken, so dass dieser erkennen kann, dass ein Anlagenteil nicht mehr zur Integration bestimmt ist.

In einer weiteren vorteilhaften Ausführungsform der Erfindung veranlasst der Integrationsserver die Ausgabe eines Implementierungsstaus der Anlagenteile, an deren Implementierung er zur Mitwirkung vorgesehen ist, z.B. eines Inbetriebsetzungsstatus, auf einer Anzeige. Ein Inbetriebsetzer kann erkennen, welche Anlagenteile bereits mit ihrer leittechnischen Funktionalität in die übrige Leittechnik implementiert wurden und welche noch nicht. Die Ausgabe kann mit einer Codierung versehen sein, welcher Anlagenteil noch nicht installiert, mit nicht aktueller Version installiert oder mit aktueller Version installiert ist. Liegt z.B. eine neue leittechnische Funktionalität vor, so kann der Aktualitätscodierung verändert werden. Auf diese Weise kann der Bediener oder Inbetriebsetzer erkennen, wenn eine leittechnische Funktionalität durch eine neue ersetzt oder überarbeitet werden soll.

Außerdem wird vorgeschlagen, dass der Integrationsserver eine Funktion eines Anmeldedienstes zum selbständigen Anmelden eines Steuersystems beim Integrationsserver nach Implementierung der leittechnischen Funktionalität deaktiviert, insbesondere löscht. Eine Kommunikation kann stets von Seiten des Integrationsservers neu aufgebaut werden.

Ebenfalls vorteilhaft ist die Deaktivierung, insbesondere Löschung, des Integrationsservers nach vorgegebener Abarbeitung von Arbeitsschritten. Diese Deaktivierung bzw. Löschung kann vom Integrationsserver selbst veranlasst oder vorgenommen werden.

Die Erfindung ist außerdem gerichtet auf eine leittechnische Einrichtung für eine Industrieanlage, die einen Anlagenserver und mehrere Anlagenteile, die jeweils ein Steuersystem aufweisen, umfasst.

Gemäß der Erfindung wird vorgeschlagen, dass ein außerhalb des Anlagenteils in der leittechnischen Einrichtung integrierter Integrationsserver vorhanden ist, der dazu vorbereitet ist, mit einem Steuersystem eines der Anlagenteile zu kommunizieren, eine leittechnische Funktionalität für das Anlagenteil zu bestimmen und deren Implementierung im Anlagenserver und im Steuersystem des Anlagenteils zu veranlassen. Der Engineering-Prozess beim Erstellen, Erweitern oder Ändern der Leittechnik kann erheblich vereinfacht werden. Die Vorbereitung des Integrationsservers kann durch seine Ausrüstung mit einem entsprechenden Computerprogramm erfolgen, das einen Computer zur Durchführung angegebenen Abläufe befähigt.

Die Erfindung wird anhand von Ausführungsbeispielen näher erläutert, die in den Zeichnungen dargestellt sind.

Es zeigen:
FIG 1 eine schematische Übersichtsdarstellung einer Leittechnik einer Industrieanlage und
FIG 2 eine schematische Darstellung einer Aktualitätscodierung von leittechnischen Funktionalitäten von Anlagenteilen der Industrieanlage.

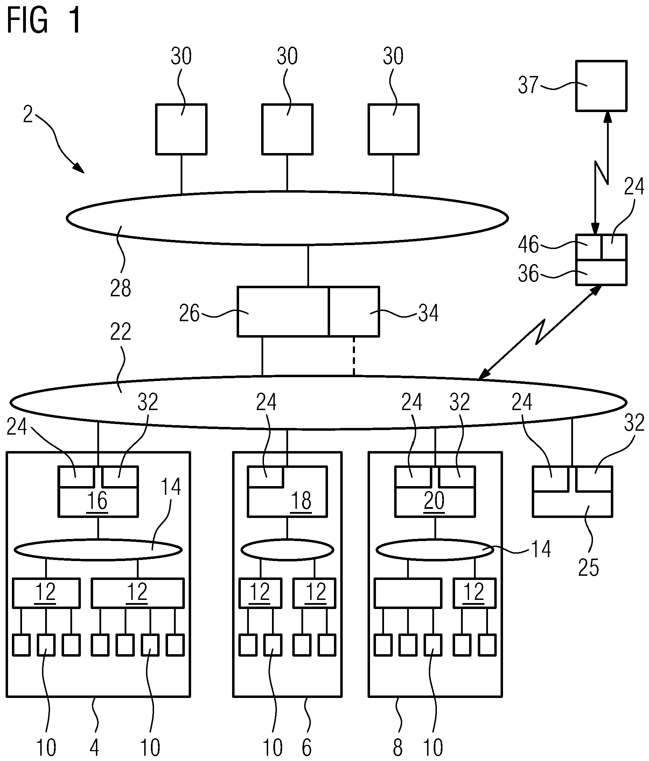

FIG 1 zeigt eine schematische Übersichtsdarstellung einer leittechnischen Einrichtung 2 einer Industrieanlage, die als Kraftwerk ausgeführt ist, mit mehreren Anlagenteilen 4, 6, 8. Die Anlagenteile 4, 6, 8 umspannen jeweils eine Feldebene mit Feldelementen 10, wie Sensoren und Aktuatoren. Diese werden über Ein-/Ausgabebaugruppen 12, die über einem Bussystem 14 mit den Automatisierungseinheiten verbunden sind, an die leittechnische Einrichtung angeschlossen. Jeder Anlagenteil 4, 6, 8 ist jeweils mit einer Automatisierungseinheit - im Folgenden als Steuersystem 16, 18, 20 bezeichnet - ausgestattet, die ihrerseits mit dem Bussystem 14 und einem anlagenweiten Bussystem 22 verbunden sind. Die Steuersysteme 16, 18, 20 sind dazu vorgesehen, die Anlagenteile 4, 6, 8 mit Hilfe jeweils einer leittechnischen Funktionalität 24 zu steuern und zu überwachen und weitere Funktionen zu übernehmen.

Neben den Anlagenteilen 4, 6, 8 ist die Anlage mit einem Service 25 ausgestattet, beispielsweise in Form eines Servers, der als Software alleine oder in Verbindung mit eigener Hardware ausgerüstet sein kann. Der Service 25 kann zur Steuerung innerhalb der Anlage dienen, z.B. zur Leistungssteuerung des gesamten Kraftwerks. Es ist auch möglich, dass der Service mehrere - z.B. gleichartige - Anlagenteile steuert.

Für übergeordnete Aufgaben, wie zum Management der Anlagenteile 4, 6, 8, ist ein Anlagenserver 26 vorhanden, der mit dem anlagenweiten Bussystem 22 und einem weiteren Bussystem 28 verbunden ist zur Kommunikation mit Arbeitsplätzen (Clients) 30, die zur Bedienung und Beobachtung sowie für Aufgaben des Engineering und der Diagnose der Leittechnik 2 und der gesamten Industrieanlage eingerichtet sind.

Während eines Aufbaus der Industrieanlage, beispielsweise einem Kraftwerk, wurden die Anlagenteile 4, 6, 8 vom Hersteller an den Ort der Anlage geliefert. Die Anlagenteile 4, 6 sind hierbei bereits mit leittechnischen Funktionalitäten 24 ausgerüstet gewesen, wohingegen dem Anlagenteil 8 diese fehlt, da sie zum Zeitpunkt der Verschiffung noch nicht fertig gestellt war.

Die leittechnische Funktionalität 24 des Anlagenteils 6 wird zur Inbetriebsetzung der Anlage durch entsprechende Bediener wie bisher üblich in die Leittechnik 2 implementiert. Der Service 25 und die Anlagenteile 4, 8 umfassen hingegen in ihrem Steuersystem 16, 20 für eine Implementierung einen Dienst 32, der sich nach einem Anschluss des Steuersystems an das Bussystem 22 selbständig bei einem Integrationsservice, im Folgenden als Integrationsserver 34 bezeichnet, meldet, der als Teil des Anlagenservers 26 eingerichtet ist. Der Integrationsserver 34 kann alternativ mit einer eigenständigen Hardware ausgestattet sein. Er kann selbständig mit dem Bussystem 22 verbunden sein, wie durch eine gestrichelte Linie angedeutet ist.

Nachdem der Dienst 32 das Steuersystem 16 bzw. den Anlagenteil 4 beim Integrationsserver 34 angemeldet hat, prüft dieser, ob das Steuersystem 16 bzw. der Anlagenteil 4 zur Kommunikation mit dem Integrationsserver 34 vorgesehen ist. Ist dies der Fall, so fragt der Integrationsserver 34 beim Steuersystem 16 nach Informationen zu dessen leittechnischer Funktionalität 24, z.B. nach dessen Versionskennzeichnung, die das Steuersystem 16 mitteilt. Anschließend nimmt der Integrationsserver 24 über eine externe Datenverbindung, wie z.B. das Internet, Kontakt zu einem Offsite-Server 36 auf, der außerhalb der jeweiligen Industrieanlage liegt, z.B. in einem anderen Land, und fragt dort nach einer leittechnischen Funktionalität 24 für das Steuersystem 16 nach. Im Offsite-Server 36 liegen leittechnische Funktionalitäten 24 zusammen mit Informationen zu ihnen, z.B. Versionsinformationen oder Implementierungsinformationen. Diese wurden von den Herstellern 37 der Anlagenteile 4, 8 dort hinterlegt. Anhand der Informationen prüft nun der Integrationsserver 34, ob eine leittechnische Funktionalität 24 für den Anlagenteil 4 vorliegt, die aktueller ist als diejenige, die mit dem Anlagenteil 4 mitgeliefert wurde. Dies sei in einem ersten Szenario nicht der Fall.

Da die leittechnische Funktionalität 24 des Steuersystems 16 aktuell ist, veranlasst der Integrationsserver 34 dessen Implementierung in der Leittechnik 2. Hierfür wird sie dem Anlagenserver 26 übermittelt, der sie im Steuersystem 16 und im Anlagenserver 26 z.B. installiert, so dass die verschiedenen Funktionen der Funktionalität 24 ausgeführt werden können.

In einem anderen Szenario kann es sein, dass der Hersteller 37 des Anlagenteils 4 während eines Umgangs mit dem Anlagenteil 4, z.B. einer Verschiffung des Anlagenteils 4, Änderungen in dessen leittechnischer Funktionalität 24 vornimmt. Die nun aktuellste Version legt er dann auf dem Offsite-Server 36 ab. Durch die Abfrage der Versionsinformationen sowohl der im Steuersystem 16 vorhandenen Funktionalität 24 als auch derjenigen auf dem Offsite-Server 36 durch den Integrationsservers 34 erkennt dieser die aktuellste Version. Diese wird auf Veranlassung des Integrationsservers 34 auf das Steuersystem 16 aufgespielt und in der Leittechnik 2 implementiert.

Der Hersteller des Services 25 kann in analoger Weise ein Update der Funktionalität 24 auf dem Offsite-Server 36 hinterlegen, so dass diese später im Service 25 implementiert wird.

Der Anlagenteil 8 wurde ohne leittechnische Funktionalität ausgeliefert. Der Hersteller 37 hat diese jedoch nachgeliefert und auf dem Offsite-Server 36 abgelegt. Nach Anmeldung des Dienstes 32 des Steuersystems 20 beim Integrationsserver 34 erkennt dieser, dass die Funktionalität 24 fehlt, fragt diese beim Offsite-Server 36 ab und veranlasst dessen Implementierung in der Leittechnik 2. Dies kann auch als Sonderfall eines Updates gesehen werden, wie im Abschnitt zuvor beschrieben.

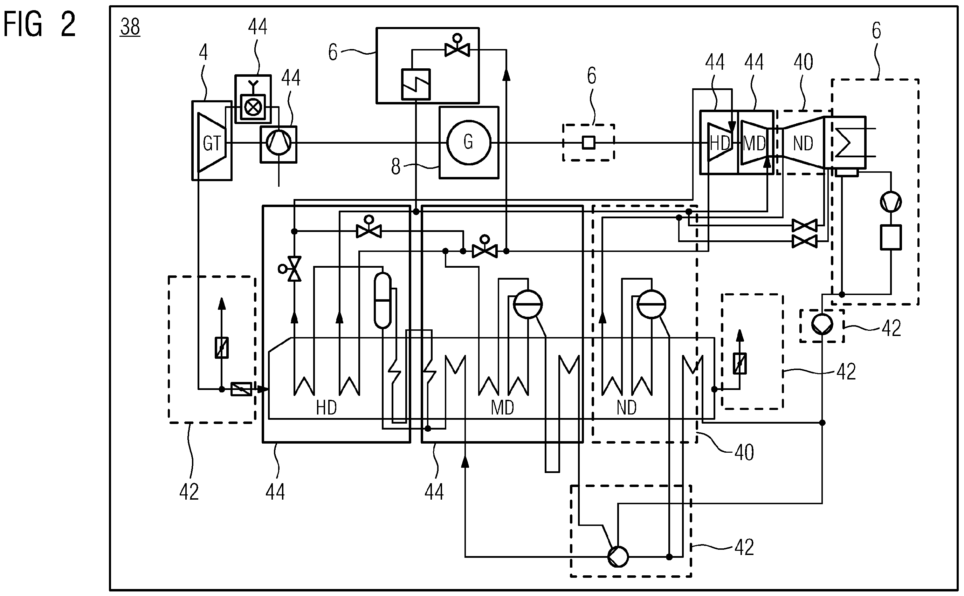

Um einem Inbetriebsetzer Informationen über einen Fortschritt bzw. Status der Inbetriebsetzung zur Verfügung zu stellen, ist der Integrationsserver 34 mit einem Dienst ausgestattet, der auf einer Anzeige, z.B. einem Client 30 eine Statusdarstellung 38 ausgibt, wie sie beispielhaft in FIG 2 wiedergegeben ist.

Auf dieser Statusdarstellung 38 sind die Komponenten der Anlage in einem Diagramm wiedergegeben, unter ihnen auch die Anlagenteile 4, 6, 8 und weitere Anlagenteile 40, 42, 44. Die Anlage ist z.B. ein Gas- und Dampfkraftwerk mit einem Generator, einer Gasturbine und einer Dampfturbine mit einer Hochdruck-, Mitteldruck- und Niederdruckturbine sowie einer Speisewasserbereitung mit einem Hochdruck-, Mitteldruck- und Niederdruckteil. Die einzelnen Anlagenteile 4, 6, 8, 40, 42, 44 sind entsprechend ihrem Status der Implementierung ihrer leittechnischen Funktion 24 codiert angezeigt. In FIG 2 ist diese Codierung durch verschiedene Strichformen dargestellt, wobei Farbcodierungen ebenfalls vorteilhaft sind.

Bei den fett umrandeten Anlagenteilen 4, 44 ist deren leittechnische Funktionalität 24 in der Leittechnik 2 vollständig implementiert und aktuell. Die leittechnischen Funktionalitäten der Anlagenteile 40 der Niederdruckturbine und der Niederdruckstufe sind zwar zur Implementierung durch den Integrationsserver 34 vorgesehen - die entsprechende Umrandung ist fett gestrichelt, die Implementierung ist jedoch noch nicht erfolgt, da sich diese Anlagenteile 40 noch nicht beim Integrationsserver 34 angemeldet haben. Die leittechnischen Funktionen 24 der Anlagenteile 42 sind, wie beim Anlagenteil 6, nicht zur Implementierung durch den Integrationsserver 34 vorgesehen. Die Anlagenteile 6, 42 sind dünn gestrichelt dargestellt.

Die leittechnische Funktionalität 24 des Generators (Anlagenteil 8) wurde bereits implementiert. Allerdings hat der Hersteller 37 diese überarbeitet und eine neue Version auf dem Offsite-Server 36 abgelegt. Dieser hat den Integrationsserver 34 benachrichtigt, so dass dieser erkannt hat, dass die leittechnische Funktionalität 24 des Generators nicht mehr aktuell ist. Entsprechend hat er dessen Codierung geändert, nämlich von einer fetten Umrandung auf eine dünne Umrandung heruntergestuft. Der Inbetriebsetzer kann hieraus die Inaktualität der leittechnischen Funktionalität 24 des Generators erkennen und die Implementierung der neuen leittechnischen Funktionalität durch den Integrationsserver 34 veranlassen. Es ist auch möglich, dass der Offsite-Server 36 eine Nachricht direkt an den Inbetriebsetzer sendet, z.B. per SMS oder E-Mail, wenn neue leittechnische Funktionalität 24 auf dem Offsite-Server 36 abgelegt wird. Nach einer erfolgreichen Inbetriebsetzung sind alle Anlagenteile 4, 8, 40, 44 fett umrandet dargestellt.

Der Integrationsserver 34 ist mit Informationen darüber versehen, beispielsweise einer Anlagenliste, zu welchen Anlagenteilen 4, 8, 40, 44 er bei der Implementierung von deren leittechnischer Funktionalitäten 24 mitwirkt. Entsprechend erwartet er deren Anmeldung und gibt die entsprechende Codierung aus, wie in FIG 2 dargestellt ist. Meldet sich ein erwartetes Anlagenteil zu einem vorgesehenen Zeitpunkt nicht, der vom Inbetriebsetzer angegeben sein kann, so fragt der Integrationsserver 34 beim Offsite-Server 36 nach, ob seine Anlagenliste noch aktuell ist. Ist dies der Fall, kann eine Fehlermeldung ausgegeben werden, z.B. visuell auf der Anzeige oder per E-Mail an den Inbetriebsetzer, dass die entsprechende Implementierung überfällig ist. Ist die Anlagenliste nicht mehr aktuell und der entsprechende Anlagenteil nicht mehr zur Behandlung durch den Integrationsserver 34 vorgesehen, kann die Statuscodierung entsprechend geändert werden, ggf. verbunden mit einer Nachricht, z.B. an den Inbetriebsetzer.

Auf der anderen Seite kann es sein, dass ein Anlagenteil 6 neu zur Behandlung durch den Integrationsserver 34 vorgesehen ist. Das Anlagenteil 6 bzw. dessen Steuersystem 18 wird mit einem Anmeldedienst versehen und meldet sich beim Integrationsserver 34 an. Dieser findet den Anlagenteil 6 nicht in seiner Liste und fragt nach einer aktuellen Liste beim Offsite-Server 36 an und ruft diese ab. Sie enthält den Anlagenteil 6. Anschließend wird der Status in der Statusdarstellung 38 entsprechend geändert, die Funktionalität mit Hilfe des Integrationsservers 34 implementiert und danach der Status in der Statusdarstellung 38 erneut geändert.

Tritt während der Inbetriebsetzung ein Fehler auf oder wird die Leittechnik 2 entgegen einer ursprünglichen Planung verändert, so kann ein Inbetriebsetzer eine Funktionalität eines Anlagenteils verändern. Der veränderte Anlagenteil selbst oder der Verursacher der Änderung meldet diese an den Integrationsserver 34, der die veränderte Funktionalität auf dem Offsite-Server 36 ablegt und den Hersteller 37 oder eine andere Stelle hierüber benachrichtigt. Der Hersteller 37 oder jemand anderes kann nun die Funktionalität überarbeiten und als neue Version wieder auf dem Offsite-Server 36 ablegen. Dieser benachrichtigt den Integrationsserver 34, oder dieser fragt regelmäßig nach, der eine Anzeige der neuen Version als Statusänderung wie beschrieben veranlasst, so dass die neue Version auf Freigabe hin, z.B. durch den Inbetriebsetzer, implementiert werden kann.

Nach einer erfolgreichen Implementierung einer Funktionalität wird der zugehörige Anmeldedienst 32 durch den Integrations-server 34 vom entsprechenden Steuersystem 16, 20 entfernt. Analog deaktiviert oder entfernt sich der Integrationsserver 34 nach erfolgreicher kompletter Inbetriebnahme und vor Übergabe der Industrieanlage an den Betreiber. Die Deaktivierung bzw. Entfernung kann auch von einer Person veranlasst werden.

Nach der vollständigen Inbetriebsetzung der gesamten Anlage und während ihres Betriebs kann der Hersteller 37 oder jemand anderes eine neue leittechnische Funktionalität 24 auf dem Offsite-Server 36 ablegen. Der Offsite-Server 36 benachrichtigt hierauf einen Bediener, z.B. durch eine entsprechende visuelle Nachricht auf einer Anzeige, oder den Integrations-server 34, wenn dieser noch vorhanden ist. Ist er noch vorhanden, so veranlasst er eine entsprechende Statusänderung auf der Statusdarstellung 38. Auf eine Freigabe hin wird die neue bzw. aktuelle Funktionalität 24 implementiert. Wurde der Integrationsserver 34 bereits deaktiviert oder entfernt, so kann er erneut eingerichtet werden und den Statusbericht und die Implementierung übernehmen. Der Statusbericht kann alternativ oder zusätzlich als Funktion im Anlagenserver 26 hinterlegt sein, so dass der Statusbericht weiter gegeben werden kann, auch wenn der Integrationsserver 34 bereits deaktiviert oder gelöscht ist.

Als weitere Funktion ist der Offsite-Server mit einem Sicherungsdienst 46 versehen, der leittechnische Funktionalitäten 24 in ihrer aktuellen und in vorangegangenen Versionen mit jeweils ihren Referenzdaten, der Ablagezeit auf dem Offsite-Server und der Abrufzeit, zu der sie vom Offsite-Server abgerufen wurde, gespeichert hält. Es kann so auf Funktionalitäten zurückgegriffen werden, auch wenn diese nicht mehr verwendet werden, z.B. zur Fehleranalyse oder zur Weiterverwendung bei Änderungen de Anlage.

## Patentansprüche

1. Verfahren zur Installation einer leittechnischen Funktionalität (24) in eine leittechnische Einrichtung (2) für eine Industrieanlage,
wobei die Industrieanlage eine leittechnische Einrichtung (2), einen Anlagenserver (26) und mehrere Anlagenteile (4, 6, 8, 40, 42, 44) umfasst,
wobei der Anlagenserver (26) einen Integrationsserver (34) umfasst,
wobei die Anlagenteile (4, 6, 8, 40, 42, 44) jeweils ein Steuersystem (16, 18, 20) aufweisen,
wobei die leittechnische Einrichtung (2) zur Steuerung der Prozesse in der gesamten Industrieanlage dient,
wobei die leittechnische Funktionalität (24) ein Computerprogramm ist, und
wobei ein Steuersystem (16, 18, 20) und der Integrationsserver (34) in Kommunikation miteinander treten und der Integrationsserver (34) eine leittechnische Funktionalität (24) für das Steuersystem (16, 18, 20) bestimmt,
**dadurch gekennzeichnet, dass**
- die Steuersysteme (16, 18, 20) der Anlagenteile (4, 6, 8, 40, 44) jeweils einen Anmeldedienst (32) zum selbständigen Anmelden beim Integrationsserver (34) aufweisen und
- der Anmeldedienst (32) nach einem Anschluss des Steuersystems an ein anlagenweites Bussystem (22) sich selbständig bei dem Integrationsserver (34) meldet und
- der Integrationsserver (34) die Installation der leittechnischen Funktionalität (24) für das Steuersystem (16, 18, 20) in die leittechnische Einrichtung (2) veranlasst und nach erfolgreicher Installation der leittechnischen Funktionalität (24) den Anmeldedienst vom Steuersystem (16, 18, 20) entfernt.

2. Verfahren nach Anspruch 1,
**dadurch gekennzeichnet, dass** der Integrationsserver (34) Daten von einem außerhalb der Industrieanlage angeordneten Offsite-Server (36) abfragt und die leittechnische Funktionalität (24) für den Anlagenteil (4, 6, 8, 40, 44) in Abhängigkeit dieser Daten bestimmt.

3. Verfahren nach Anspruch 2,
**dadurch gekennzeichnet, dass** der Integrationsserver (34) eine auf dem Offsite-Server (36) abgelegte leittechnische Funktionalität (24) zur Installation bestimmt.

4. Verfahren nach einem der vorhergehenden Ansprüche, **dadurch gekennzeichnet, dass** der Integrationsserver (34) Information zur leittechnischen Funktionalität (24) des Anlagenteils (4, 6, 8, 40, 44), mit dem er in Kommunikation steht, abfragt.

5. Verfahren nach einem der vorhergehenden Ansprüche, **dadurch gekennzeichnet, dass** der Integrationsserver (34) prüft, ob eine aktuelle Version der leittechnischen Funktionalität (24) des Anlagenteils (4, 6, 8, 40, 44) vorliegt

6. Verfahren nach einem der vorhergehenden Ansprüche, **dadurch gekennzeichnet, dass** der Integrationsserver (34) aus mehreren für den betreffenden Anlagenteil (4, 6, 8, 40, 44) vorhandenen leittechnischen Funktionalitäten (24) eine als aktuelle Version gekennzeichnete leittechnische Funktionalität (24) zur Installation auswählt.

7. Verfahren nach einem der vorhergehenden Ansprüche, **dadurch gekennzeichnet, dass** der Integrationsserver (34) nach einer Installation einer leittechnischen Funktionalität (24) eines Anlagenteils (4, 6, 8, 40, 44) erkennt, wenn eine neue Version der leittechnischen Funktionalität (24) des Anlagenteils (4, 6, 8, 40, 44) vorliegt.

8. Verfahren nach einem der vorhergehenden Ansprüche, **dadurch gekennzeichnet, dass** der Integrationsserver (34) Informationen darüber enthält, zu welchen Anlagenteilen (4, 6, 8, 40, 44) er eine Installation von deren leittechnischer Funktionalität (24) veranlasst.

9. Verfahren nach einem der vorhergehenden Ansprüche, **dadurch gekennzeichnet, dass** der Integrationsserver (34) ermittelt, ob eine aktualisierte Aufstellung derjenigen Anlagenteile (4, 6, 8, 40, 44) vorliegt, mit denen eine Kommunikation vorgesehen ist, wenn eine Kommunikation von einem Anlagenteil (4, 6, 8, 40, 44) zu ihm aufgebaut wurde, das nicht für eine Kommunikation mit ihm vorgesehen war.

10. Verfahren nach einem der vorhergehenden Ansprüche, **dadurch gekennzeichnet, dass** der Integrationsserver (34) ermittelt, ob eine aktualisierte Aufstellung derjenigen Anlagenteile (4, 6, 8, 40, 44) vorliegt, mit denen eine Kommunikation vorgesehen ist, wenn sich ein zur Kommunikation mit ihm vorgesehenes Anlagenteil (4, 6, 8, 40, 44) nicht bis zu einem vorgegebenen Ablaufpunkt bei ihm angemeldet hat.

11. Verfahren nach einem der vorhergehenden Ansprüche, **dadurch gekennzeichnet, dass** der Integrationsserver (34) die Ausgabe eines Installationsstatus auf einer Anzeige veranlasst.

12. Verfahren nach einem der vorhergehenden Ansprüche, **dadurch gekennzeichnet, dass** der Integrationsserver (34) die eigene Deaktivierung oder Löschung nach vorgegebener Abarbeitung von Arbeitsschritten veranlasst.

13. Industrieanlage umfassend eine leittechnische Einrichtung (2), einen Anlagenserver (26) und mehrere Anlagenteile (4, 6, 8, 40, 42, 44),
wobei die leittechnische Einrichtung (2) zur Steuerung der Prozesse in der gesamten Industrieanlage dient,
wobei die leittechnische Einrichtung (2) eine leittechnische Funktionalität (24) umfasst, die ein Computerprogramm ist,
wobei der Anlagenserver (26) einen Integrationsserver (34) umfasst,
wobei die Anlagenteile (4, 6, 8, 40, 42, 44) jeweils ein Steuersystem (16, 18, 20)
aufweisen,
wobei die Steuersysteme (16, 18, 20) und der Integrationsserver (34) dazu eingerichtet sind in Kommunikation miteinander zu treten und der Integrationsserver (34) dazu eingerichtet ist eine leittechnische Funktionalität (24) für das Steuersystem (16, 18, 20) zu bestimmen,
**dadurch gekennzeichnet, dass**
- die Steuersysteme (16, 18, 20) der Anlagenteile (4, 6, 8, 40, 44) jeweils einen Anmeldedienst (32) zum selbständigen Anmelden beim Integrationsserver (34) aufweisen und
- der Anmeldedienst (32) dazu eingerichtet ist nach einem Anschluss des Steuersystems an ein anlagenweites Bussystem (22) sich selbständig bei dem Integrationsserver (34) zu melden und
- der Integrationsserver (34) dazu eingerichtet ist, die Installation der leittechnischen Funktionalität (24) für das Steuersystem (16, 18, 20) in die leittechnische Einrichtung (2) zu veranlassen und nach erfolgreicher Installation der leittechnischen Funktionalität (24) den Anmeldedienst vom Steuersystem (16, 18, 20) zu entfernen.

## Claims

1. Method for installing a control functionality (24) into a control facility (2) for an industrial installation, wherein the industrial installation comprises a control facility (2), an installation server (26) and a number of installation parts (4, 6, 8, 40, 42, 44), wherein the installation server (26) comprises an integration server (34), wherein the installation parts (4, 6, 8, 40, 42, 44) in each case have a control system (16, 18, 20), wherein the control facility (2) is used to control the processes in the entire industrial installation, wherein the control functionality (24) is a computer program and wherein a control system (16, 18, 20) and the integration server (34) communicate with one another and the integration server (34) determines a control functionality (24) for the control system (16, 18, 20),
**characterised in that**
- the control systems (16, 18, 20) of the installation parts (4, 6, 8, 40, 44) in each case have a login service (32) for independently logging into the integration server (34), and
- after connecting the control system to a bus system (22) across the entire installation, the login service (32) independently registers with the integration server (34) and
- the integration server (34) prompts the installation of the control functionality (24) for the control system (16, 18, 20) into the control facility (2) and following successful installation of the control functionality (24) removes the login service from the control system (16, 18, 20).

2. Method according to claim 1,
**characterised in that**
the integration server (34) retrieves data from an offsite server (36) arranged outside of the industrial installation and determines the control functionality (24) for the installation part (4, 6, 8, 40, 44) as a function of this data.

3. Method according to claim 2,
**characterised in that** the integration server (34) determines a control functionality (24) stored on the offsite server (36) for installation purposes.

4. Method according to one of the preceding claims,
**characterised in that** the integration server (34) retrieves information relating to the control functionality (24) of the installation part (4, 6, 8, 40, 44), with which it communicates.

5. Method according to one of the preceding claims,
**characterised in that** the integration server (34) checks whether a current version of the control functionality (24) of the installation part (4, 6, 8, 40, 44) is present.

6. Method according to one of the preceding claims,
**characterised in that** the integration server (34) selects a control functionality (24) identified as the current version for installation purposes from a number of control functionalities (24) available for the relevant installation part (4, 6, 8, 40, 44).

7. Method according to one of the preceding claims,
**characterised in that** after installation of a control functionality (24) of an installation part (4, 6, 8, 40, 44), the integration server (34) identifies when a new version of the control functionality (24) of the installation part (4, 6, 8, 40, 44) is present.

8. Method according to one of the preceding claims,
**characterised in that** the integration server (34) includes information about the installation parts (4, 6, 8, 40, 44) at which it triggers an installation of their control functionality (24).

9. Method according to one of the preceding claims,
**characterised in that** the integration server (34) determines whether an updated list of those installation parts (4, 6, 8, 40, 44) with which a communication is provided is present, if a communication has been established thereto from an installation part (4, 6, 8, 40, 44) which was not provided for a communication therewith .

10. Method according to one of the preceding claims,
**characterised in that** the integration server (34) determines whether an updated list of those installation parts (4, 6, 8, 40, 44), with which a communication is provided exists, if an installation part (4, 6, 8, 40, 44) provided for communication therewith has not logged in thereto by a predetermined execution point.

11. Method according to one of the preceding claims,
**characterised in that** the integration server (34) triggers the output of an installation status on a display.

12. Method according to one of the preceding claims,
**characterised in that** the integration server (34) triggers the individual deactivation or deletion according to predetermined processing of production steps.

13. Industrial installation comprising a control facility (2), an installation server (26) and a number of installation parts (4, 6, 8, 40, 42, 44), wherein the control facility (2) is used to control the processes in the entire industrial installation, wherein the control facility (2) comprises a control functionality (24) which is a computer program, wherein the installation server (26) comprises an integration server (34), wherein the installation parts (4, 6, 8, 40, 42, 44) each have a control system (16, 18, 20), wherein the control systems (16, 18, 20) and the integration server (34) are designed to communicate with one another and the integration server (34) is designed to determine a control functionality (24) for the control system (16, 18, 20), **characterised in that**
- the control systems (16, 18, 20) of the installation parts (4, 6, 8, 40, 44) in each case have a login service (32) for independently logging into the integration server (34) and the login service (32) is designed to independently register with the integration server (34) after connecting the control system to a bus system (22) across the entire installation and the integration server (34) is designed to trigger the installation of the control functionality (24) for the control system (16, 18, 20) into the control facility (2) and following successful installation of the control functionality (24) to remove the login service from the control system (16, 18, 20).

## Revendications

1. Procédé d'installation d'une fonctionnalité (24) de technique de conduite dans un dispositif (2) de technique de conduite d'une installation industrielle,
dans lequel l'installation industrielle comprend un dispositif (2) de technique de conduite, un serveur (26) d'installation et plusieurs parties (4, 6, 8, 40, 42, 44) d'installation,
dans lequel le serveur (26) d'installation comprend un serveur (34) d'intégration,
dans lequel les parties (4, 6, 8, 40, 42, 44) d'installation ont chacune un système (16, 18, 20) de commande,
dans lequel le dispositif (2) de technique de conduite sert à commander les processus dans toute l'installation industrielle,
dans lequel la fonctionnalité (24) de technique de conduite est un programme d'ordinateur,
et dans lequel un système (16, 18, 20) de commande et le serveur (34) d'intégration entrent en communication entre eux et le serveur (34) d'intégration détermine une fonctionnalité (24) de technique de conduite pour le système (16, 18, 20) de commande,
**caractérisé en ce que**
- les systèmes (16, 18, 20) de commande des parties (4, 6, 8, 40, 44) d'installation ont chacun un service (32) d'annonce pour s'annoncer de manière autonome auprès du serveur (34) d'intégration et
- le service (32) d'annonce s'annonce de manière autonome auprès du serveur (34) d'intégration, après une connexion du système de commande à un système (22) de bus étendu à l'installation,
et
- le serveur (34) d'intégration provoque l'installation de la fonctionnalité (24) de technique de conduite pour le système (16, 18, 20) de commande dans le dispositif (2) de technique de conduite et, après réussite de l'installation de la fonctionnalité (24) de technique de conduite, retire le service d'annonce du système (16, 18, 20) de commande.

2. Procédé suivant la revendication 1,
**caractérisé en ce que** le serveur (34) d'intégration demande des données d'un serveur (36) hors site disposé à l'extérieur de l'installation industrielle et détermine la fonctionnalité (24) de technique de conduite pour la partie (4, 6, 8, 40, 44) d'installation en fonction de ces données.

3. Procédé suivant la revendication 2,
**caractérisé en ce que** le serveur (34) d'intégration détermine pour l'installation une fonctionnalité (24) de technique de conduite mise en mémoire dans le serveur (36) hors site.

4. Procédé suivant l'une des revendications précédentes,
**caractérisé en ce que** le serveur (34) d'intégration demande de l'information sur la fonctionnalité (24) de technique de conduite de la partie (4, 6, 8, 40, 44) d'installation, avec laquelle il est en communication.

5. Procédé suivant l'une des revendications précédentes,
**caractérisé en ce que** le serveur (34) d'intégration contrôle si il y a une version en cours de la fonctionnalité (24) de technique de conduite de la partie (4, 6, 8, 40, 44) d'installation.

6. Procédé suivant l'une des revendications précédentes,
**caractérisé en ce que** le serveur (34) d'intégration sélectionne pour l'installation, dans plusieurs fonctionnalités (24) de technique de conduite présentes pour la partie (4, 6, 8, 40, 44) d'installation concernée, une fonctionnalité (24) de technique de conduite **caractérisée** comme version en cours.

7. Procédé suivant l'une des revendications précédentes,
**caractérisé en ce que** le serveur (34) d'intégration reconnaît, après une installation d'une fonctionnalité (24) de technique de conduite d'une partie (4, 6, 8, 40, 44) d'installation, si il y a une version nouvelle de la fonctionnalité (24) de technique de conduite de la partie (4, 6, 8, 40, 44) de l'installation.

8. Procédé suivant l'une des revendications précédentes,
**caractérisé en ce que** le serveur (34) d'intégration contient de l'information sur les parties (4, 6, 8, 40, 44) d'installation, dont il provoque une installation par leur fonctionnalité (24) de technique de conduite.

9. Procédé suivant l'une des revendications précédentes,
**caractérisé en ce que** le serveur (34) d'intégration détermine si il y a une mise en œuvre mise à jour des parties (4, 6, 8, 40, 44) d'installation, avec lesquelles une communication est prévue, s'il a été établi avec lui une communication d'une partie (4, 6, 8, 40, 44) d'installation, qui n'était pas prévue pour une communication avec lui.

10. Procédé suivant l'une des revendications précédentes,
**caractérisé en ce que** le serveur (34) d'intégration détermine s'il y a une mise en œuvre mise à jour des parties (4, 6, 8, 40, 44) d'installation, avec lesquelles une communication est prévue, si une partie (4, 6, 8, 40, 44) d'installation prévue pour la communication avec lui ne n'est pas annoncée auprès de lui jusqu'à un point de déroulement donné à l'avance.

11. Procédé suivant l'une des revendications précédentes,
**caractérisé en ce que** le serveur (34) d'intégration provoque l'émission d'un état d'installation sur un affichage.

12. Procédé suivant l'une des revendications précédentes,
**caractérisé en ce que** le serveur (34) d'intégration provoque sa propre désactivation ou un effacement après une élaboration donnée à l'avance de stades de travail.

13. Installation industrielle comprenant un dispositif (2) de technique de conduite, un serveur (26) d'installation et plusieurs parties (4, 6, 8, 40, 42, 44) d'installation,
dans laquelle le dispositif (2) de technique de conduite sert à commander les processus dans toute l'installation industrielle,
dans laquelle le dispositif (2) de technique de conduite comprend une fonctionnalité (24) de technique de conduite, qui est un programme d'ordinateur,
dans laquelle le serveur (26) d'installation comprend un serveur (34) d'intégration,
dans laquelle les parties (4, 6, 8, 40, 42, 44) d'installation ont chacune un système (16, 18, 20) de commande,
dans laquelle les systèmes (16, 18, 20) de commande et le serveur (34) d'intégration sont conçus pour entrer en communication les uns avec l'autre, et le serveur (34) d'intégration est conçu pour déterminer une fonctionnalité (24) de technique de conduite pour le système (16, 18, 20) de commande,
**caractérisée en ce que**
- les systèmes (16, 18, 20) de commande des parties (4, 6, 8, 40, 44) d'installation ont chacun un service (32) d'annonce pour s'annoncer de manière autonome auprès du serveur (34) d'intégration et
- le service (32) d'annonce est conçu pour, après une connexion du système de commande à un système (22) de bus s'étendant à toute l'installation, s'annoncer de manière autonome auprès du serveur (34) d'intégration,
- le serveur (34) d'intégration est conçu pour provoquer l'installation de la fonctionnalité (24) de technique de conduite pour le système (16, 18, 20) de commande dans le dispositif (22) de technique de conduite et, après installation réussie de la fonctionnalité (24) de technique de conduite, retirer le service d'annonce du système (16, 18, 20) de commande.
